# EUROPEAN PATENT APPLICATION

(11) **EP 4 700 512 A1**
(43) Date of publication of application: **25.02.2026**
(21) Application number: 24195889.1
(22) Date of filing: 22.08.2024
(51) Int. Cl.: G05B 19/418

(54) **GENERATION AND DEBUGGING OF HIERARCHICAL PLANS FOR PERFORMING WORKFLOW PROCESSES**

(71) Applicant: Siemens Aktiengesellschaft, 80333 München (DE)
(72) Inventor: Albrecht, Sebastian, 85399 Hallbergmoos (DE); Kast, Bernd, 89335 Ichenhausen (DE); Schürmann, Bastian, 85375 Neufahrn bei Freising (DE); Deroo, Frederik, 85399 Hallbergmoos (DE)
(74) Representative: Siemens Patent Attorneys

(57) **Abstract**

Embodiments of the present disclosure provide a method and system for generating and debugging hierarchical plans for a workflow process. The method may comprise providing a subset of operators from a plurality of operators representing possible operations one or more machines are able to perform during an execution of the workflow process; providing a goal state definition for the workflow process; generating, by one or more processors of a planning engine and based on the one or more operators and the goal state definition, a hierarchical plan including one or more hierarchical levels of the workflow process; deploying and executing the hierarchical plan on the one or more machines and/or in one or more simulated digital representations of the one or more machines and of an environment where the one or more machines are located; in response to at least one failed operator occurring during execution of a respective hierarchical level of the hierarchical plan, providing one or more debugging operators associated with the at least one failed operator, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level; while iteratively executing the one or more feasible operators, continuously monitoring the intermediate goal state of the one or more machines and/or of the simulated digital representations and if the intermediate state reaches an intermediate goal at the respective hierarchical level, updating the hierarchical plan by replacing the at least one failed operator with the one or more debugging operators leading to the intermediate goal state of the one or more machines and/or of the simulated digital representations; and executing the updated hierarchical plan until the goal state is achieved.

## Description

### TECHNICAL FIELD

The non-limiting and exemplary embodiments of the present disclosure generally relate to the technical field of generation, debugging and execution of hierarchical plans for performing workflow processes by machines of industrial facilities, and specifically to methods and systems for planning and debugging executions of operation sequences achieving goal states of technical system workflows and checking them through system simulation or system hardware execution.

### BACKGROUND

Technical systems such as especially robotic systems may contain components for flexible or even autonomous production, which depend on automatic ordering of production steps known as orchestration. When the technical or robotic system includes for instance robots doing manipulations the task of orchestrating automatic ordering and parametrization of production steps can neither be solved solely on a symbolic level nor solely on a sub-symbolic, i.e., continuous, level. For instance, continuous properties of these robot manipulators like poses, torques, geometries are important to assure that the movements are feasible on the technical or robotic systems. On the other hand, sequences of tasks such as grasping or assembling change the configuration of the product and/or the technical or robotic system and thus can only be efficiently captured on a symbolic level for planning. The more flexible technical system workflows have to be, the more intertwined these two aspects become. Thus, for full flexibility the planning approaches must consider both aspects in a combined manner which results in complex planning tasks.

This complexity can be reduced by a hierarchical planning, which is described in the following published patent documents EP 3 446 185 B1, WO 2018/121904 A1, WO 2020/025103 A1 and EP 3 978 202 A1. So, the hierarchical planning can compute such sequences of tasks even for parallel processes and replanning due to plan deviations if they are obtained by measurements. Hierarchies focus on specific aspects while omitting others and thereby the hierarchies of the planning are used in the context of reducing the complexity to trade possibly optimality for feasibility. However, specifying tasks for any planner that then can be executed on real hardware is an error-prone process.

If the planning approach does not find a solution, e.g., a motion planner cannot find a collision-free path, a user of the motion planner is left alone without much information. So normally, little to no information is offered on where exactly the planning failed or what went wrong and for what reason. Therefore, debugging of planning is tedious and requires expert knowledge, particularly for task and motion planning. This is especially true for a hierarchical planning approach, since depending on the current hierarchy level, certain information the user thinks to be obvious might not be available to the planner at that level.

The cited hierarchical planning approach is rather new. Currently, one can visualize a hierarchical plan by showing the point where the planning failed and corresponding available instances. Then the user must check either visually or by small test scripts which steps of the sequences of tasks can be applied, and which fail. By using debugging features of a standard programming in an Integrated Development Environment (IDE), one can then check the actual hardware execution of the failing steps to find the cause for the failure. This approach lacks any intuition for non-expert users and is time-consuming due to the sheer number of possibilities that need to be checked at every level of the hierarchical plan in order to find a feasible solution where no collision or other problems occur, so that a final plan that reaches a specified goal state can be obtained. Furthermore, the absence of graphical interfaces in traditional hierarchical planning methods exacerbates the issue by increasing both the time and costs associated with debugging a failed plan. Thus, when encountering or predicting with a high degree of confidence a problem such as collision it is important to reliably discover which step of the hierarchical plan produced the problem and to identify possible solutions so that a final plan achieving the end state can be feasibly achieved.

In classical automation an engineer would specify a sequence of tasks in advance and setup a motion generation for each of these tasks separately. If one of the sub-motions fails, the task is step by step modified: by varying required poses at start and end, by changing a configuration, e.g., positions of objects in a working environment of the technical or robotic system, or by introducing intermediate points. That way one would iterate towards a feasible motion for the sub-task. And continue with the process for all following sub-motions.

Despite the availability of the general planning approaches (i.e., offline planning, online planning, hierarchical planning), there continues to be a need for improved approaches for generation and especially for debugging of execution of workflow processes in an industrial environment.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

An example scenario according to one or more embodiments of the present disclosure may be summarized as follows.

A planning domain may be describing facts and nominal operators as well as special debugging operators. A selection of these elements may together with goals describe a planning task to be solved. For example, the planning domain as component may be realized via an additional Graphical User Interface (GUI) or a text editor. The planning domain may also be part of a nominal hierarchical planning.

A planning approach may receive a planning task from the planning domain component and may try to find a plan that transforms initial instances (facts) into desired instances (goals). The planning approach may also be part of the nominal hierarchical planning. If a full plan is found, it may be forwarded to an execution engine. If only a partial plan is found, the situation of the present disclosure occurs. The partial plan may then forwarded to the GUI.

The GUI may combine three elements: a visualization of the hierarchy of the partial plan (i.e., a partial hierarchical plan), selection menus for operators, and a visualization, e.g., 3D visualization of a real environment where a workflow process performed by one or more machines may be running. By selecting a part of the nominal hierarchical plan which causes or is most likely to cause a collision/problem (e.g., collisions, dropping of objects carried by the one or more machines, valves not closing/opening, etc.), and some nominal operators and possibly including debugging operators a step-by-step call of the operators can be realized. The operators and the possibly debugging operators are called with selected instances of the plan step and executed via the execution engine. The execution engine is also part of the scenario. The execution engine triggers the calls of the operators. The operators are executed in software or hardware depending on the level of abstraction and the operator's implementation. An execution result, e.g., joint trajectories, are then send to the visualization component of the GUI. Fixing the task specification and general setup may be part of the planning domain with the GUI.

The above sketched hierarchical planning scenario is remarkable by following aspects: Debugging (hierarchical) planning is very tedious and requires a lot of expert knowledge. The debugging operators may allow an unexperienced user to directly see the mismatch between expected behavior and real behavior or may automatically correct the behaviour of the hierarchical plan such that a final goal state may be reached. A manual triggering of additional (debugging) operators and stepping through a plan allows to fine-tune a current hierarchical planning level. This allows to identify aspects/information missing in a digital model of the technical or robotic system and fix them on the fly.

In the general hierarchical planning setup several operators exist and commonly only a sequence of such operators can solve a planning or sub-planning task. Allowing to step through the hierarchy of a planning task, and selecting and executing operators in the debugging mode provides the required flexibility to determine a cause of failure and a feasible strategy to handle the task complexity.

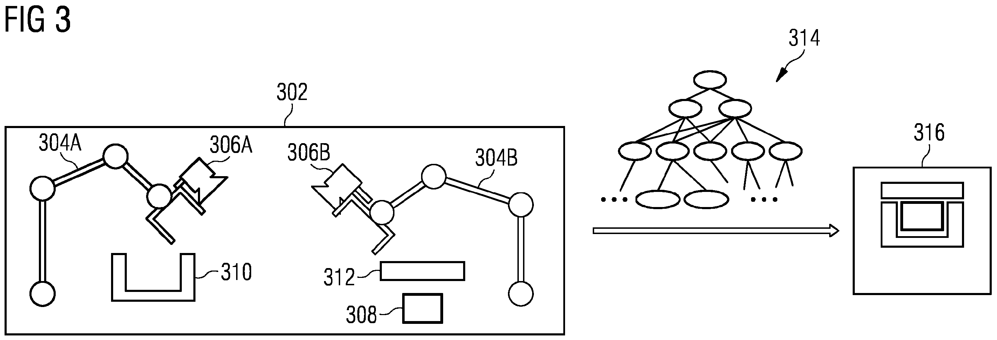

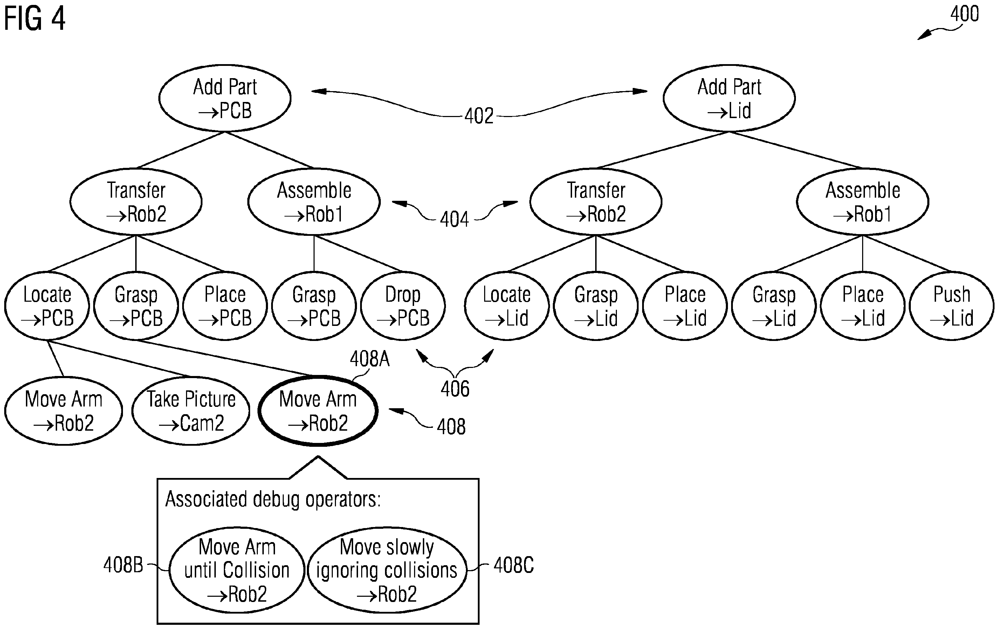

Further, in 3D object design a related problem exists, where one must determine if a certain object allows collision-free assembly. The 3D object design may then visualize which parts are in collision. However, the central difference is that production hardware is additionally considered by the present disclosure. Whether an object can be grasped and placed depends on the technical or robotic system and for example on a production hardware of the robot, e.g. a gripper geometry of the robot, the robot's kinematics and relative pose, the assembly status, etc. Therefore, a debugging step is no static problem that can be solved pairwise, but it requires to actually consider all motions and task sequences. Moreover, additional advantageous developments of the invention arise out of the following description of a preferred embodiment of the invention according to Figures 3 and 4.

Embodiments of the present disclosure are generally directed to solutions that enable efficient generation, execution, and debugging of hierarchical plans. One or more embodiments include a computer-implemented method and a system for generating and debugging hierarchical plans for a workflow process. The method may comprise providing a subset of operators from a plurality of operators representing possible operations one or more machines are able to perform during an execution of the workflow process;
providing a goal state definition for the workflow process;
generating, by one or more processors of a planning engine and based on the one or more operators and the goal state definition, a hierarchical plan including one or more hierarchical levels of the workflow process;
deploying and executing the hierarchical plan on the one or more machines and/or in one or more simulated digital representations of the one or more machines and of an environment where the one or more machines are located;
in response to at least one failed operator occurring during execution of a respective hierarchical level of the hierarchical plan, providing one or more debugging operators associated with the at least one failed operator, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level;
while iteratively executing the one or more feasible operators, continuously monitoring the intermediate goal state of the one or more machines and/or of the simulated digital representations and if the intermediate goal state reaches an intermediate goal at the respective hierarchical level, updating the hierarchical plan by replacing the at least one failed operator with the one or more debugging operators leading to the intermediate goal state of the one or more machines and/or of the simulated digital representations; and
executing the updated hierarchical plan until the goal state is achieved.

Thus, the method described above thus provides efficient generation of hierarchical plans that can be executed on one or more machines or in a simulated digital representation, and which can be easily debugged by non-expert users. In addition, the method enables real-time plan updating by continuously monitoring the intermediate goal states. If the intermediate goal state reaches the intermediate goal at the respective hierarchical level where the failed operator occurred, the hierarchical plan is updated by replacing the failed operator with the debugging operators that lead to the intermediate goal state. This ensures that the plan remains adaptable and responsive to changes or errors during execution.

In some embodiments, each hierarchical level of the hierarchical plan may include one or more sub-goals, one or more operators of the subset of operators, and one or more facts; and/or the hierarchical levels may describe different levels of abstraction for the workflow process; and/or the feasible operators may ensure that a sub-goal in a higher level of the hierarchical plan is achieved by successfully moving the execution of the hierarchical plan from the respective hierarchical level where the failed operator occurred to a goal of the higher level in the hierarchical plan. By breaking down the workflow process into hierarchical levels and sub-goals, the method allows for a more granular and modular approach to planning and execution. This enables better organization and management of the workflow process, as each sub-goal represents a specific task or objective that needs to be achieved. It also allows for easier monitoring and tracking of progress at different levels, making it more manageable to analyze the overall workflow process.

In some embodiments, the method may further comprise executing each sub-goal of each hierarchical level in the simulated digital representations; and in response to each sub-goal being successfully executed in the simulated digital representations, generating the hierarchical plan. This simulation-based approach provides a controlled environment for testing and validating the execution of each sub-goal. Successful execution of each sub-goal in the simulated digital representations indicates that the plan is likely to work effectively in the real-world scenario. This helps in generating a more reliable and robust hierarchical plan.

In some embodiments, the feasible ranges of parameters for the one or more machines in the respective hierarchical level of the hierarchical plan where the failed operator is located, the feasible ranges of parameters ensuring that a sub-goal in a higher level of the hierarchical plan is achieved by successfully moving the execution of the hierarchical plan from the respective hierarchical plan where the failed operator is located to a goal of the higher level in the hierarchical plan; and/or the feasible operators may include a combination of other operators of the subset of operators that are performable within the respective hierarchical level of the hierarchical plan where the failed operator is located so that execution of the hierarchical plan successfully moves from the respective hierarchical plan where the failed operator is located to a goal of a higher level in the hierarchical plan. This allows for greater flexibility and adaptability in the execution of the hierarchical plan, so that in the event of a failed operator, the method can dynamically adjust and explore different parameter settings and alternative combinations of operators within the same hierarchical level. This flexibility enables the method to find alternative paths or approaches to achieve the sub-goal resulting from an operator in a higher level of the hierarchical plan, it increases the chances of successfully moving the execution of the hierarchical plan from the respective hierarchical level to a goal of the higher level, ensuring progress towards the final goal state even in the presence of failures or unexpected circumstances.

In some embodiments, the method may further comprise for each hierarchical level, generating the feasible operators using a Large Language Model, LLM, trained and fine-tuned for motion planning tasks and based on one or more subsets of operators stored in a database and successfully used for a plurality of industrial planning tasks. The LLM leverages the knowledge and experiences from the stored subsets of operators used successfully in a variety of motion planning tasks, ensuring that the generated operators are based on proven strategies and best practices. This improves the quality of the generated operators and increases the likelihood of successfully executing the hierarchical plan for motion planning tasks.

In some embodiments, the method may further comprise providing a starting state definition for the workflow process, the starting state including information about parameters of the one or more machines and/or facts associated with the environment where the one or more machines are located. By considering the starting state, the method can take into account the specific configuration and constraints of the machines, as well as the environmental factors that may influence their operation.

In some embodiments, the method may further comprise, if the goal state is not achieved based on the subset of operators and/or the one or more debugging operators, providing a new subset of operators and/or a new goal state definition for the workflow process; generating, by the one or more processors of the planning engine and based on the new subset of operators and the new goal state definition, a new hierarchical plan; and in response to the new hierarchical plan being executed by one or more processors of an execution engine, feeding back measurements from the one or more machines and/or simulation parameters of the simulated digital representation to a graphical user interface, GUI, for outputting them to a user for control purposes or for considering them by the user in: specifying other workflow related goal states, in deploying one or more workflow related facts. Such a feedback loop from the execution engine to the GUI provides the user with real-time information and insights that can be used for control purposes. The user can make informed decisions, specify alternative goal states, or deploy additional workflow-related facts based on the feedback received.

In some embodiments, the feasible ranges of parameters for the one or more machines in the respective hierarchical level of the hierarchical plan may include acceptable deviations from a nominal parameter of the one or more machines for which an operator in the respective hierarchical level is expected to be successfully executed; and/or the feasible ranges of parameters included in the one or more debugging operators may include deviations in the paraments that are compensable by the one or more machines. By including feasible ranges of parameters that allow for acceptable deviations from the nominal parameters of the machines, the method enhances the robustness and fault tolerance of the system.

In some embodiments, the goal state definition for the workflow process may include information regarding one or more parts or products used during execution of the workflow process; and/or the hierarchical plan may be executed by one or more processors of an execution engine which in turn may transmit control commands to the one or more machines and/or to the simulated digital representations. This allows the method to consider the specific requirements and characteristics of the parts or products involved in the workflow process so that precision and accuracy of the execution is enhanced.

In some embodiments, the at least one operator may comprise a collision event, wherein the method may further comprise detecting the collision event based on data from at least one of: a micro-electromechanical (MEMS) device, an electro-mechanical sensor, a mechanical switch, a pressure sensor, a temperature sensor, a torque sensor, an optical sensor, an ultrasonic sensor, a camera device, and/or a LiDAR device. Such a comprehensive collision detection capability enhances safety and reduces the risk of accidents or damage in the system. It enables prompt and appropriate responses to collision events, such as stopping or rerouting the motion, ensuring the protection of the machines, products, or individuals involved.

In some embodiments, the one or more machines may include one or more robotic arms, and the one or more robotic arms may optionally include one or more grippers; and/or the workflow process may include manipulation and/or assembly of the one or more parts according to the goal definition and executing the subset of operators to obtain a final product. Robotic arms are known for their precision, flexibility, and dexterity, making them well-suited for complex manipulation tasks. The inclusion of grippers further enhances the method's ability to grasp, hold, and manipulate various parts or objects involved in the workflow process. This allows for efficient and accurate manipulation and assembly of the parts according to the goal definition.

Other embodiments include a system for generating and debugging hierarchical plans for a workflow process. The system may comprise: a plurality of machines each configured to perform a plurality of workflow processing steps according to the workflow process;
one or more processors; and
a memory, the memory storing computer-readable instructions that, when executed by one or more of the processors, cause the one or more of the processors to:
   provide a subset of operators from a plurality of operators representing possible operations one or more machines are able to perform during an execution of the workflow process;
   provide a goal state definition for the workflow process;
   generate based on the one or more operators and the goal state definition, a hierarchical plan including one or more hierarchical levels of the workflow process;
   deploy and execute the hierarchical plan on the one or more machines and/or in one or more simulated digital representations of the one or more machines and of an environment where the one or more machines are located;
   in response to at least one failed operator occurring during execution of a respective hierarchical level of the hierarchical plan, provide one or more debugging operators associated with the at least one failed operator, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level;
   while iteratively executing the one or more feasible operators, continuously monitor the intermediate goal state of the one or more machines and/or of the simulated digital representations and if the intermediate goal state reaches an intermediate goal at the respective hierarchical level, update the hierarchical plan by replacing the at least one failed operator with the one or more debugging operators leading to the intermediate goal state of the one or more machines and/or of the simulated digital representations; and
   execute the updated hierarchical plan until the goal state is achieved.

In some embodiments, the instructions may further cause the one or more of the processors to perform the steps of the method according to any one of the methods described above.

Other embodiments include a computer-readable storage medium storing instructions which when executed by one or more processors, cause the one or more processors to perform the method according to any one of the methods described above.

Other embodiments include a computer program product comprising instructions which when executed by at least one processor, cause the at least one processor to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Figures 1A and 1B are schematic diagrams illustrating example operators, according to prior art.
Figure 2 is a schematic diagram illustrating an example system, according to one or more embodiments of the present disclosure.
Figure 3 is a schematic diagram illustrating an example system, according to one embodiment of the present disclosure.
Figure 4 is a schematic diagram illustrating an example hierarchical plan, according to one or more embodiments of the present disclosure.
Figure 5 is a flow diagram illustrating an example computer implemented-method, according to one or more embodiments of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

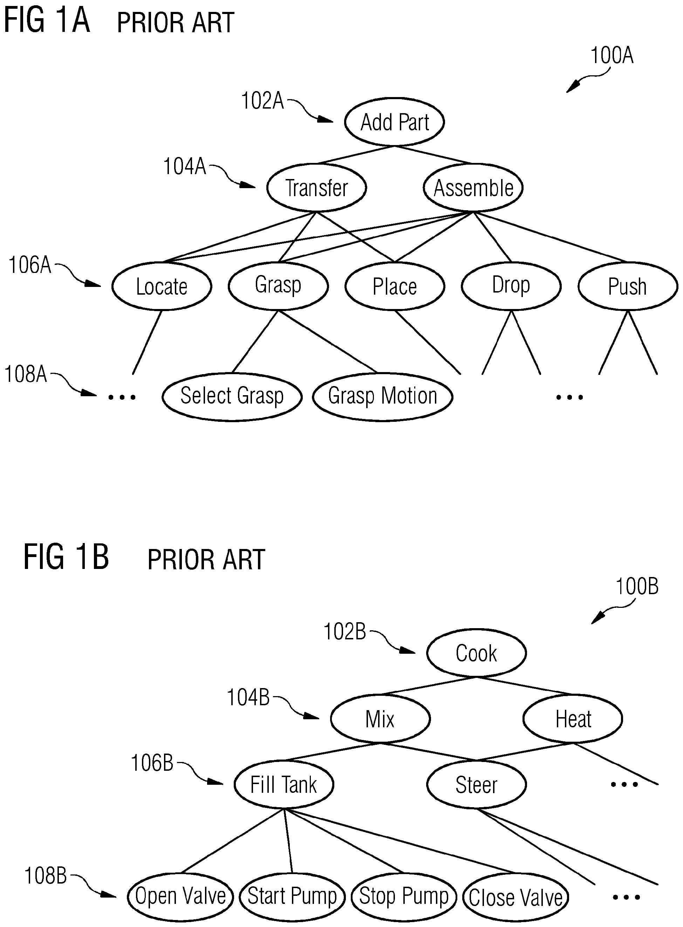

Figures 1A and 1B are schematic diagrams illustrating example operators within hierarchical plans (100A, 100B), according to prior art. For example, operators may exist for different domains and in different hierarchy/abstraction levels. For example, operators may belong to discrete manufacturing (e.g., manipulation and assembly of product parts), and may include operations that may be performed by, for example, robotic arms which may comprise a gripper in order to perform a task (such as placing of a part together with or in another part) of a workflow process. For example, the operators may comprise, operators used for generating a hierarchical plan (100A), such as operators on different hierarchical levels (102A-108A) having different levels of detail/refinement including but not limited to "add part", "transfer", "assemble", "locate", "grasp", "place", "drop", "push", "select grasp", and/or "grasp motion". In another example, operators may belong to process industry (i.e., a "continuous" domain) and may include operations that may be performed by different machines (e.g., motors, mixers, pumps, valves, heaters, etc.) and control units of the different machines to perform a task (e.g., a cooking task) of a workflow process. For example, the operators may comprise operators used for generating a hierarchical plan (100B), such as operators on different hierarchical levels (102B-108B) having different levels of detail/refinement including but not limited to "cook", "mix", "heat", "fill tank", "steer", "open valve", "start pump", "stop pump", "close valve".

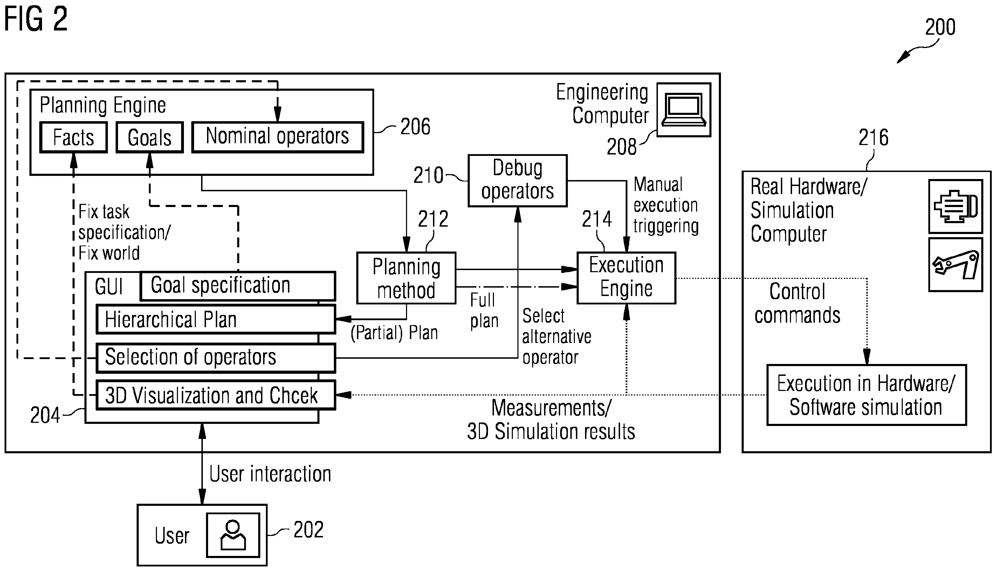

Figure 2 is a schematic diagram illustrating an example system (200) for generating and debugging hierarchical plans for a workflow process for example of manufacturing and/or assembly equipment (e.g., automation machines, robots, motors, etc.). For example, a user (202) (e.g., a human worker/operator), may provide a planning task to a planning engine (206) via a graphical user interface (204). For example, the planning task may include specifications including operators (such as the operators illustrated in Figures 1A and 1B), procedures, facts, measures and/or goals to be achieved by one or more machines (216) of the manufacturing/assembly equipment. The planning engine (206) may generate based on the specifications of the planning task, a hierarchical plan including a plurality of operators (100A, 100B) performable by the one or more machines (216). For example, the hierarchical plan may include different hierarchical levels of abstraction (i.e., of details) describing goals and sub-goals that need to be executed to reach a final goal defined in the planning task. Optionally, the planning engine (206) may also consider during planning the possibility of errors/deviations of the hierarchical plan and may generate different procedures/operators to compensate for those deviations. Thus, the planning engine (206) may reason about possible situations that can lead to problems in each procedure of the hierarchical plan.

Optionally, in some embodiments, the planning engine (206) may optionally associate explicit tolerance models corresponding to one or more operators for the one or more machines in the hierarchical plan, the tolerance models representing physical tolerances of one or more parameters of the one or more machines (216) for which the hierarchical plan is guaranteed to be successfully executed or at least estimated to be successfully executed with a high probability. For example, the hierarchical plan may include thresholds up to which acceptable deviations are compensable by the manufacturing/assembly equipment (216) performing according to a workflow process of an industrial facility, and wherein the thresholds may be modelled by the tolerance models. The hierarchical plan can then be checked and edited by the user (202).

For example, the planning engine (206) may be a hierarchical planner, which plans in different levels of refinements using a planning method (212). For example, if no solution is found in a certain level of refinement, a GUI (204) provides the user specifics on a sub-task. That is, the user (202) may clearly see which sub-task fails at a current time and which operators are currently considered in the sub-planning tasks to map the initial instances (i.e., facts) towards one or more desired instances (i.e., goals), and with a choice of possible debugging operators (210) so that the user (202) can select and test the behaviour of the hierarchical plan. Additionally, one or more additional operators may be displayed. These contain for example both additional operators that might be used to extend the possibilities of a sub-planning task and special debugging operators (210) for the planning method (212). The latter are key features to get as close as possible to a cause of failure and at best provide visual feedback. The debugging operators (210) allow to proceed towards desired motion goals even if a final configuration of the hierarchical plan is not feasible (e.g., due to collisions). This means that the motion may start normally and may stop near a point of failure. Such debugging operators (210) may be visualized in a 3D environment representation. In such a visualization it may also be possible to identify failure causes intuitively even if one is no domain expert and does not know how the operators are implemented. In addition, manual trigger of execution of some operators may be provided and thereby testing of complex task sequences that are assumed to solve the sub-planning task is achieved.

The execution of the operators depends on the current abstraction level in the hierarchical plan. On the abstract levels it may correspond to a simulation environment but on the most detailed level it may involve real hardware (e.g., control units of one or more machines (216)). On the hardware level it may then be possible to step through a hierarchically derived partial plan, where a failure happened, and the user (202) may add additional operators (e.g., nominal operators or debugging operators (210)) to determine missing or faulty information or to adapt parameters until a sub-goal is successful. For example, the debugging operators (210) may provide additional functionality to better understand a problematic situation and to test behaviour of the manufacturing equipment (216) for a certain hierarchical plan. Besides visualization and simulation of tasks (e.g., within the GUI (204)), which are not necessarily provided during normal planning and operation, the debugging operators (310) may include adapting constraints and carefully changing safety limits (e.g. of the one or more machines (216)) to better understand why no plan has been found that reaches a final goal state. For example, changes in the constraints/limits could be to move slowly, while supervised by a human operator (e.g., user (202)) beyond normal boundaries to evaluate whether a collision would happen or if the system behaves as expected. In one or more embodiments, it may also be possible to include Al tools such as large language models (LLMs) or other foundational models to simplify the debugging task. For example, the user could describe an expected behaviour to an Al assistant which then suggests/generated appropriate debugging operators and parametrization to test them within a hierarchical plan, where a problem (e.g., a collision) might have occurred at a certain hierarchical level.

The (debugged) hierarchical plan may be then sent to an execution engine (214) of an engineering computer (208). The execution engine (214) is configured to send control commands based on the hierarchical plan, to the manufacturing equipment (216), and thus execute the hierarchical plan, and further continuously monitor measurements of parameters of the manufacturing equipment (216) in order to detect any problems, deviations, or collisions arising from the execution of the hierarchical plan.

Figure 3 is a schematic diagram illustrating an example system, according to one embodiment of the present disclosure. For example, two assembly robots (304A, 304B) are tasked to reach a final goal state i.e., a product (316), according to a hierarchical plan (314). The product (316) comprises in this example three parts, a first part (308) (e.g., a PCB board or any other component or product), a second part (310) (e.g., a box), and a third part (312) (e.g., such as a lid of the box). The robots (304A, 304B) may comprise one or more devices (306A, 306B) (e.g., cameras) for locating the different parts. The hierarchical plan (314) may be generated based on a start configuration and a selection of one or more operators from a discrete manufacturing domain including but not limited to those operators illustrated in Figure 1A, i.e., "add part", "transfer", "assemble", "locate", "grasp", "place", "drop", "push". The start configuration may include an initial state definition of the two robots (304A, 304B) or of one or more simulated 3D digital representations of the robots (304A, 304B) and/or of an environment where the robots (304A, 304B) are located. For example, the initial state definition may comprise information about different parameters of the robots (304A, 304B) (e.g., positions, orientations, start configurations etc.) and information corresponding to features of the product (316). Further, a goal definition may represent a housing including pose information of the housing (e.g., relative position and orientation with respect to other objects in the environment where an assembly through the machines (216, 304A, 304B) will be taking place), information about a content of the housing, e.g., a PCB having a certain pose within the housing and a lid with an associated pose on top of the housing. In a further example, a starting state definition for the workflow process may also be provided, the starting state including information about parameters of the robots (304A, 304B) and/or facts associated with the environment where the robots (304A, 304B) are located and operated.

In a next step, the planning engine (206) of Figure 2 proceeds in generating a hierarchical plan (314) and based on which a final goal state may be reached. For example, the planning engine (206) evaluates/iterates through all available operators to find a sequence of operators reaching the final goal.

Figure 4 is a schematic diagram illustrating an example of a generated hierarchical plan (314, 400) including different hierarchical levels (402, 404, 406, 408) of abstraction, according to one or more embodiments of the present disclosure. For example, each hierarchical level (402, 404, 406, 408) of the hierarchical plan (314, 400) includes one or more sub-goals, each sub-goal including one or more operators of the subset of operators.

The planning method (212) may generate a first level (402) in the hierarchical plan (314, 400) including for example two operators (e.g., "Add Part -> PCB" and "Add Part -> Lid"). The planning method (212) may determine, for example, based on input data from the cameras (306A, 306B) that the lid (312) and the PCB (308) may be too far away from the box (310) and the two operators in the first hierarchical level (402) may thus not performable by a first robot (304A). In addition, the planning method (212) may determine with a high probability that placing the box (310) by the first robot (304A) near the second robot (306B) may result in a collision. For example, this may be done by simulating the behavior of the two robots when executing operators of the hierarchical plan. Therefore, in order to perform the operator "Add Part -> PCB", the planning method (212) generates two sub-tasks/sub-goals including a second (finer) level (404) of details, i.e., "Transfer -> Rob2" (meaning that the PCB (308) has to be first transferred by the second robot (304B) to the first robot (304A) or at least at a location within reach of the first robot (304A)) and "Assemble -> Rob1" (meaning that the PCB (308) has then to be assembled/placed by the first robot (304A)). The planning method (212) iterates through all available operators to find a respective sequence of operators reaching each sub-goal in each hierarchy level until a final goal (e.g., "Add Part -> Lid") is successfully reached. Thus, an output of each step of a hierarchical level defines a new goal for the planning on a more detailed level. For example, operators at the lowest hierarchical level (408) (i.e., the most detailed level) may comprise operators that may be directly executable on real hardware such as the robots (304A, 304B)).

The hierarchical plan (314, 400) generated as described above may then be executed by one or more machines (216) such as the two robots (304A, 304B). Conventionally in traditional debugging, an operator is called for a certain task. During execution by the execution engine (214), various (safety) requirements may be checked, and if the behaviour does not satisfy the requirements, an exception (error) is thrown, and the execution is terminated. A planning method then tries again with different parameters or one or more other different operators. Conventionally, such problems occur often during planning, as the planner tries many different combinations of parameters and operators. If no feasible solution is found, an operator/user might be able to see all tried operator/parameter combinations (possibly in the thousands) but might not have any indication why the plan crashed and raised the exception. Even if the user has an idea how the correct execution might look like, they do not have an easy way to check it and correct it since the possible combinations of operators might be very large. Even if the number of operators to try out is small, it is not even possible to try out the operators by selecting them manually, since the operators might not be executed at all if a check fails.

Continuing with the example of Figures 3 and 4, after generating the hierarchical plan (314, 400), the engineering computer (208) deploys the hierarchical plan (314, 400) on the one or more machines and/or in one or more simulated digital representations of the one or more machines and of an environment where the one or more machines are located, and the execution engine (214) executes the hierarchical plan (314, 400) on the one or more machines (216) and/or in the one or more simulated digital representations. For example, the GUI (204) may include a 3D visualization and check during deployment and execution of the hierarchical plan (314, 400) where the user (202) may be able to see the progress in the hierarchical plan (314, 400). Further, in response to at least one failed operator (408A) occurring due to e.g., a collision of a robotic arm, during execution of a respective hierarchical level (408) of the hierarchical plan (314, 400), one or more debugging operators (408B, 408C) associated with the at least one failed operator (408A) are provided. For example, the one or more debugging operators (408B, 408C) may include feasible operators performable by the one or more machines (216, 304A, 304B) in the respective hierarchical level (408) of the hierarchical plan (400) where the at least one failed operator (408A) is located. For example, the feasible operators may ensure that a sub-goal in a higher level of the hierarchical plan is achieved by successfully moving the execution of the hierarchical plan from the respective hierarchical level where the failed operator (408A) occurred to a goal of the higher level in the hierarchical plan. That is, the feasible operators may ensure that an intermediate goal state is achieved for the one or more machines (216, 304A, 304B) and/or the simulated digital representations for the respective hierarchical level (408A). For example, the associated operators (408B, 408C) may include but not limited to operators such as "Move Arm until Collision -> Rob2" and "Move slowly ignoring collisions -> Rob2", which are executable by the second robot (306B). For example, each operator in each of the hierarchical levels (402, 404, 406, 408) can have one or more associated debug operators. The debug operators may include feasible operators comprising feasible ranges of parameters for the one or more machines (216, 304A, 304B) in the respective hierarchical level of the hierarchical plan where the failed operator is located. Optionally or alternatively the feasible operators may include a combination of other operators of the subset of operators that are performable within the respective hierarchical level of the hierarchical plan where the failed operator is located so that execution of the hierarchical plan moves from the respective hierarchical plan where the failed operator is located to a goal of a higher level in the hierarchical plan.

In another example, the GUI (204) may be a debugging GUI that may suggest the user (202) several suitable debugging operators. For example, an operator which checks if the communication with the motion-planner service is correct. Another operator which shows in a 3D representation how the start and end configuration would look like. An operator which shows the whole scene in a 3D visualizer and samples of evaluated paths (including collisions which lead to disregarding these paths). In addition, other several operators may be provided which let the user slowly move the robot and which offer an indication when the motion planner expects a collision to happen. Another operator lets the user change the initial configuration, e.g., to change the pose of the object in a gripper (which is useful if the object has been grasped in the wrong way in a previous step). A list of suitable debugging operators may be generated by filtering the set of all suitable operators based on the current hardware-configuration (e.g., the debugging operator which checks if the pressure for a suction gripper works is only shown if a suction gripper is used in the scene) and the high-level plan. They may be ordered by likelihood of the usefulness. Based on the scene model, the debugging operators may be automatically parametrized, e.g., the maximum opening width of a gripping operator can be automatically set to the maximum opening width of a used two-finger gripper.

In a further example, for each hierarchical level, the feasible operators may be generated using a Large Language Model (LLM) or any other foundational models trained and fine-tuned for industrial planning tasks and based on one or more subsets of operators stored in a database that were successfully used for a plurality of previous motion planning tasks.

If no plan is found due to failed operators, an interactive debugging may be automatically triggered. For example, the user (202) might even be able to make educated guesses for a correct plan by graphically visualizing in the GUI (204) the most promising planning results (plans which, for example, worked for higher levels and which failed on a lower hierarchical level of operators). The planning method (212) and/or the user (202) may choose one of the failed plans and select one or more operators, that are expected/simulated to work, and get information about what the cause of failure was. For example, a debug operator may provide more information, e.g., by trying to execute the task as far as possible, with relaxed constraints, or with a different cost function. This may help stepping through the hierarchical levels of the plan to quickly identify the cause of failure regarding why an expected plan could not be generated and thus allows for quickly debugging of the hierarchical plan.

For example, while iteratively executing the one or more feasible operators, the execution engine (214) continuously monitors an intermediate goal state of the one or more machines (216, 304A, 304B) and/or of the simulated digital representations and if the intermediate state reaches an intermediate goal at the respective hierarchical level (408), the planning method (212) of the planning engine (206) may update the hierarchical plan by replacing the at least one failed operator (408A) with the one or more debugging operators (408B, 408C) leading to the intermediate goal state of the one or more machines (216, 304A, 304B) and/or of the simulated digital representations. For example, failure states may comprise one or more collision events that may be identified using data from one or more sensors fitted to the one or more machines (216, 304A, 304B). In a non-limiting example, such sensors may include: a micro-electromechanical, MEMS, device, an electro-mechanical sensor, a mechanical switch, a pressure sensor, a temperature sensor, a torque sensor, an optical sensor, an ultrasonic sensor, a camera device, and/or a LiDAR device.

Further, the execution engine (214) may execute the updated hierarchical plan until the goal state is achieved, e.g., until the lid (312) is successfully pushed on the housing (310).

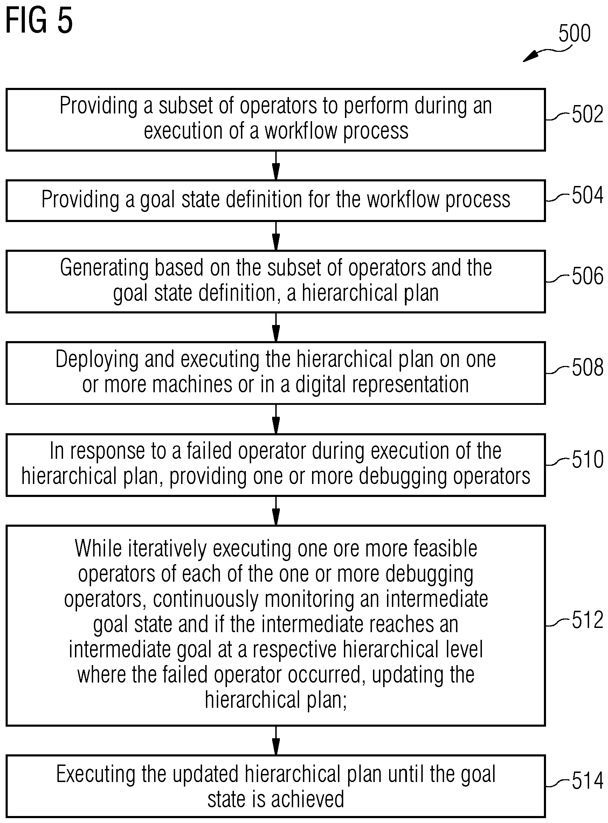

In view of all of the above, particular embodiments of the present disclosure include a method (500) implemented by a computing device, as illustrated in Figure 5. Step 502 comprises providing a subset of operators from a plurality of operators representing possible operations one or more machines are able to perform during an execution of the workflow process. Step 504 comprises providing a goal state definition for the workflow process. Step 506 comprises generating, by one or more processors of a planning engine and based on the one or more operators and the goal state definition, a hierarchical plan including one or more hierarchical levels of the workflow process. Step 508 comprises deploying and executing the hierarchical plan on the one or more machines and/or in one or more simulated digital representations of the one or more machines and of an environment where the one or more machines are located. Further, in step 510, in response to at least one failed operator occurring during execution of a respective hierarchical level of the hierarchical plan, one or more debugging operators associated with the at least one failed operator are provided, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level. Furthermore, step 512 comprises, while iteratively executing the one or more feasible operators, continuously monitoring the intermediate goal state of the one or more machines and/or of the simulated digital representations and if the intermediate state reaches an intermediate goal at the respective hierarchical level, updating the hierarchical plan by replacing the at least one failed operator with the one or more debugging operators leading to the intermediate goal state of the one or more machines and/or of the simulated digital representations. Finally, in step 514, the updated hierarchical plan is executed until the goal state is achieved.

In one example configuration, the system (200) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. For example, the processor and memory unit may be incorporated into the system (200) or may be a computer or computer communicatively linked thereto such as the engineering computer (208) depicted in Figure 2. The processor may be programmable hardware capable of executing software instructions stored (to plan, generate, debug and execute workflow processes or otherwise perform the method described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (200) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (200) may also have input device(s) such as keyboard, mouse, pen, voice input, etc. and/or output device(s) such as a display, speakers, printer, etc. Also included in the system (200) may be one or more communication connections, such as LAN, WAN, point to point, etc. In embodiments, the connections may be operable to facilitate point-to-point communications, connection-oriented communications, connectionless communications, etc. The system (200) may further include interface circuitry configured to control input and output (I/O) data paths of the system (200). For example, such I/O data paths may include data paths for receiving planning tasks from the user (202) and/or for exchanging signals with the manufacturing equipment (216, 304A, 304B) over the one or more communication connections.

The embodiments of the present disclosure provide an approach for efficient debugging of hierarchical plans. Having described the invention in terms of a preferred embodiment, it will be recognized by those skilled in the art that modifications and variations of the preferred embodiment are possible.

## Claims

1. A computer-implemented method for generating and debugging hierarchical plans for a workflow process, comprising:
providing a subset of operators from a plurality of operators representing possible operations one or more machines are able to perform during an execution of the workflow process;
providing a goal state definition for the workflow process;
generating, by one or more processors of a planning engine and based on the one or more operators and the goal state definition, a hierarchical plan including one or more hierarchical levels of the workflow process;
deploying and executing the hierarchical plan on the one or more machines and/or in one or more simulated digital representations of the one or more machines and of an environment where the one or more machines are located;
in response to at least one failed operator occurring during execution of a respective hierarchical level of the hierarchical plan, providing one or more debugging operators associated with the at least one failed operator, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level;
while iteratively executing the one or more feasible operators, continuously monitoring the intermediate goal state of the one or more machines and/or of the simulated digital representations and if the intermediate state reaches an intermediate goal at the respective hierarchical level, updating the hierarchical plan by replacing the at least one failed operator with the one or more debugging operators leading to the intermediate goal state of the one or more machines and/or of the simulated digital representations; and
executing the updated hierarchical plan until the goal state is achieved.

2. The method of claim 1, wherein each hierarchical level of the hierarchical plan includes one or more sub-goals, one or more operators of the subset of operators, and one or more facts; and/or
wherein the hierarchical levels describe different levels of abstraction for the workflow process; and/or
wherein the feasible operators ensure that a sub-goal in a higher level of the hierarchical plan is achieved by successfully moving the execution of the hierarchical plan from the respective hierarchical level where the failed operator occurred to a goal of the higher level in the hierarchical plan.

3. The method of any of the preceding claims, further comprising:
executing each sub-goal of each hierarchical level in the simulated digital representations; and
in response to each sub-goal being successfully executed in the simulated digital representations, generating the hierarchical plan.

4. The method of any of the preceding claims, wherein the feasible operators include feasible ranges of parameters for the one or more machines in the respective hierarchical level of the hierarchical plan where the failed operator is located, the feasible ranges of parameters ensuring that a sub-goal in a higher level of the hierarchical plan is achieved by successfully moving the execution of the hierarchical plan from the respective hierarchical plan where the failed operator is located to a goal of the higher level in the hierarchical plan; and/or
wherein the feasible operators include a combination of other operators of the subset of operators that are performable within the respective hierarchical level of the hierarchical plan where the failed operator is located so that execution of the hierarchical plan moves from the respective hierarchical plan where the failed operator is located to a goal of a higher level in the hierarchical plan.

5. The method of any of the preceding claims, further comprising:
for each hierarchical level, generating the feasible operators using a Large Language Model, LLM, or other foundational models trained and fine-tuned for industrial planning tasks and based on one or more subsets of operators stored in a database and successfully used for a plurality of industrial planning tasks.

6. The method of any of the preceding claims, further comprising:
providing a starting state definition for the workflow process, the starting state including information about parameters of the one or more machines and/or facts associated with the environment where the one or more machines are located.

7. The method of any of the preceding claims, further comprising:
if the goal state is not achieved based on the subset of operators and/or the one or more debugging operators, providing a new subset of operators and/or a new goal state definition for the workflow process;
generating, by the one or more processors of the planning engine and based on the new subset of operators and the new goal state definition, a new hierarchical plan; and
in response to the new hierarchical plan being executed by one or more processors of an execution engine, feeding back measurements from the one or more machines and/or simulation parameters of the simulated digital representations to a graphical user interface, GUI, for outputting them to a user for control purposes or for considering them by the user in: specifying other workflow related goal states, in deploying one or more workflow related facts.

8. The method of any of the preceding claims, wherein the feasible ranges of parameters for the one or more machines in the respective hierarchical level of the hierarchical plan include acceptable deviations from a nominal parameter of the one or more machines for which an operator in the respective hierarchical level is expected to be successfully executed; and/or
wherein the feasible ranges of parameters included in the one or more debugging operators include deviations in the paraments that are compensable by the one or more machines.

9. The method of any of the preceding claims, wherein the goal state definition for the workflow process includes information regarding one or more parts or products used during execution of the workflow process; and/or wherein the hierarchical plan is executed by one or more processors of an execution engine which in turn transmits control commands to the one or more machines and/or to the simulated digital representations.

10. The method of any of the preceding claims, wherein optionally the failure state comprises a collision event, wherein the method further comprises detecting the collision event based on data from at least one of: a micro-electromechanical, MEMS, device, an electro-mechanical sensor, a mechanical switch, a pressure sensor, a temperature sensor, a torque sensor, an optical sensor, an ultrasonic sensor, a camera device, and/or a LiDAR device.

11. The method of any of the previous claims, wherein the one or more machines include one or more robotic arms, and wherein the one or more robotic arms optionally include one or more grippers; and/or
wherein the workflow process includes manipulation and/or assembly of the one or more parts according to the goal definition and executing the subset of operators to obtain a final product.

12. A system for generating and debugging hierarchical plans for a workflow process, comprising:
a plurality of machines each configured to perform a plurality of workflow processing steps according to the workflow process;
one or more processors; and
a memory, the memory storing computer-readable instructions that, when executed by one or more of the processors, cause the one or more of the processors to:
provide a subset of operators from a plurality of operators representing possible operations one or more machines are able to perform during an execution of the workflow process;
provide a goal state definition for the workflow process;
generate based on the one or more operators and the goal state definition, a hierarchical plan including one or more hierarchical levels of the workflow process;
deploy and execute the hierarchical plan on the one or more machines and/or in one or more simulated digital representations of the one or more machines and of an environment where the one or more machines are located;
in response to at least one failed operator occurring during execution of a respective hierarchical level of the hierarchical plan, provide one or more debugging operators associated with the at least one failed operator, the one or more debugging operators including feasible operators performable by the one or more machines in the respective hierarchical level of the hierarchical plan where the at least one failed operator is located, wherein the feasible operators ensure that an intermediate goal state is achieved for the one or more machines and/or the simulated digital representations for the respective hierarchical level;
while iteratively executing the one or more feasible operators, continuously monitor the intermediate goal state of the one or more machines and/or of the simulated digital representations and if the intermediate state reaches an intermediate goal at the respective hierarchical level, update the hierarchical plan by replacing the at least one failed operator with the one or more debugging operators leading to the intermediate goal state of the one or more machines and/or of the simulated digital representations; and
execute the updated hierarchical plan until the goal state is achieved.

13. The system of claim 12, wherein the instructions further cause the one or more of the processors to perform the steps of the method according to any one of claims 2 to 11.

14. A non-transitory computer-readable storage medium storing computer-executable instructions that, when executed by one or more processors, cause the one or more processors to perform the method according to any of claims 1 to 11.

15. A computer program product comprising instructions which when executed by at least one processor, cause the at least one processor to perform the method according to any one of claims 1 to 11.
